(19) **Europäisches Patentamt / European Patent Office / Office européen des brevets**

(11) **EP 1 277 077 B1**

(12) **EUROPÄISCHE PATENTSCHRIFT**

(45) Veröffentlichungstag und Bekanntmachung des Hinweises auf die Patenterteilung:
**13.02.2008   Patentblatt 2008/07**

(21) Anmeldenummer: **01940193.4**

(22) Anmeldetag: **25.04.2001**

(51) Int Cl.:
***G02C 7/02** (2006.01)*

(86) Internationale Anmeldenummer:
**PCT/DE2001/001583**

(87) Internationale Veröffentlichungsnummer:
**WO 2001/081982 (01.11.2001 Gazette 2001/44)**

(54) **PROGRESSIVES BRILLENGLAS MIT GERINGEN SCHAUKELEFFEKTEN**

PROGRESSIVE SPECTACLE GLASS WITH LOW ROCKING EFFECT

VERRE DE LUNETTE PROGRESSIF A FAIBLE EFFET DE BASCULE

(84) Benannte Vertragsstaaten:
**AT BE CH CY DE DK ES FI FR GB GR IE IT LI LU MC NL PT SE TR**

(30) Priorität: **25.04.2000   DE 10020243**
   **25.04.2000   DE 10020244**
   **28.04.2000   DE 10021047**
   **17.01.2001   WOPCT/DE01/00188**

(43) Veröffentlichungstag der Anmeldung:
**22.01.2003   Patentblatt 2003/04**

(73) Patentinhaber: **Rodenstock GmbH**
**80469 München (DE)**

(72) Erfinder:
• **WELK, Andrea**
 **81547 München (DE)**
• **BAUMBACH, Peter**
 **81543 München (DE)**
• **HAIMERL, Walter**
 **80337 München (DE)**
• **PFEIFFER, Herbert**
 **81247 München (DE)**
• **AWRATH, Norbert**
 **81539 München (DE)**
• **ESSER, Gregor**
 **81735 München (DE)**
• **BROSIG, Jochen**
 **82031 Grünwald (DE)**
• **MÜLLER, Werner**
 **75443 Ötisheim (DE)**
• **WECHS, Martin**
 **81373 München (DE)**
• **HASER, Stephan, Dr.**
 **81829 München (DE)**
• **ALTHEIMER, Helmut**
 **87650 Lauchdorf (DE)**
• **DORSCH, Rainer**
 **81477 München (DE)**
• **NIKOLAUS, Winfried**
 **85540 Haar (DE)**
• **ZIMMERMANN, Martin**
 **85253 Kleinberghofen (DE)**

(74) Vertreter: **Müller-Boré & Partner**
**Patentanwälte**
**Grafinger Strasse 2**
**81671 München (DE)**

(56) Entgegenhaltungen:
**EP-A- 0 911 670       EP-A- 0 911 672**
**US-A- 5 719 658       US-A- 5 784 144**
**US-A- 5 949 519**

## Beschreibung

### Technisches Gebiet

Die Erfindung bezieht sich auf ein Verfahren zum Herstellen eines Brillenglases.

Unter progressiven Brillengläsern (auch als Gleitsichtgläser, Multifokalgläser etc. bezeichnet) versteht man üblicherweise Brillengläser, die in dem Bereich, durch den der Brillenträger einen in größerer Entfernung befindlichen Gegenstand betrachtet - i.f. als Fernteil bezeichnet -, eine andere (geringere) Brechkraft haben als in dem Bereich (Nahteil), durch den der Brillenträger einen nahen Gegenstand betrachtet. Zwischen dem Fernteil und dem Nahteil ist die sog. Progressionszone angeordnet, in der die Wirkung des Brillenglases von der des Fernteils kontinuierlich auf die des Nahteils ansteigt. Den Wert des Wirkungsanstiegs bezeichnet man auch als Addition.

In der Regel ist der Fernteil im oberen Teil des Brillenglases angeordnet und für das Blicken "ins Unendliche" ausgelegt, während der Nahteil im unteren Bereich angeordnet ist, und insbesondere zum Lesen ausgelegt ist. Für Spezialanwendungen - genannt werden sollen hier exemplarisch Pilotenbrillen oder Brillen für Bildschirmarbeitsplätze - können der Fern- und der Nahteil auch anders angeordnet sein und/oder für andere Entfernungen ausgelegt sein. Ferner ist es möglich, daß mehrere Nahteile und/ oder mehrere Fernteile und entsprechende Progressionszonen vorhanden sind.

Bei progressiven Brillengläsern mit konstantem Brechungsindex ist es für die Zunahme der Brechkraft zwischen dem Fernteil und dem Nahteil erforderlich, daß sich die Krümmung einer oder beider Flächen vom Fernteil zum Nahteil kontinuierlich ändert.

Die Flächen von Brillengläsern werden üblicherweise durch die sogenannten Hauptkrümmungsradien R1 und R2 in jedem Punkt der Fläche charakterisiert. (Manchmal werden anstelle der Hauptkrümmungsradien auch die sogenannten Hauptkrümmungen K1 = 1/R1 und K2 = 1/R2 angegeben.) Die Hauptkrümmungsradien bestimmen zusammen mit dem Brechungsindex n des Glasmaterials die für die augenoptische Charakterisierung einer Fläche häufig verwendeten Größen:

$$\text{Flächenbrechwert D} = 0,5 * (n-1) * (1/R1 + 1/R2)$$

$$\text{Flächenastigmatismus A} = (n-1) * (1/R1 - 1/R2)$$

Der Flächenbrechwert D ist die Größe, über die die Zunahme der Wirkung vom Fernteil zum Nahteil erreicht wird. Der Flächenastigmatismus A (anschaulich Zylinderwirkung) ist eine "störende Eigenschaft", da ein Astigmatismus - sofern das Auge nicht selbst einen zu korrigierenden Astigmatismus aufweist -, der einen Wert von ca. 0,5 dpt übersteigt, zu einem als unscharf wahrgenommenen Bild auf der Netzhaut führt.

### Stand der Technik

Die zur Erzielung der Flächenbrechwert-Zuwachses erforderliche Änderung der Krümmung der Fläche ohne "störenden" Flächenastigmatismus ist zwar relativ einfach längs einer (ebenen oder gewundenen) Linie zu erreichen, seitlich dieser Linie ergeben sich jedoch starke "Verschneidungen" der Fläche, die zu einem großen Flächenastigmatismus führen, der das Glas in den Bereichen seitlich der genannten Linie mehr oder weniger schlecht macht.

Aus flächentheoretischen Gründen ist es also nicht möglich, bei einer Fläche, deren Flächenbrechkraft vom Fernteil zum Nahteil zunimmt, die Bereiche seitlich einer (atigmatismusfreien oder mit einem vorgegebenen Astigmatmus behafteten) Linie frei von phsiologisch störendem Flächenastigmatismus "zu halten" (Satz von Minkwitz).

Da sich im Fernteil die Krümmung nicht ändern soll, ist es relativ einfach, den Fernteil der progressiven Fläche so zu gestalten, daß der Fernteil in einem großen Bereich einen sehr kleinen Flächenastigmatismus (< 0,5 dpt) oder sogar den Flächenastigmatismus-Wert "0" aufweist. Andererseits ist die "Qualität" der Gestaltung der seitlichen Bereiche des Übergangsbereichs von entscheidender Bedeutung für die Verträglichkeit des Brillenglases für den jeweiligen Brillenträger.

Die grundsätzliche Aufgabe bei der Konstruktion jedes progressiven Brillenglases besteht damit darin, - ohne unzumutbare Verschlechterung des Fernteils - die Seitenbereiche in der Übergangszone sowie gegebenenfalls die Seitenbereiche des Nahteils so zu gestalten, daß das Brillenglas möglichst gut verträglich für den Brillenträger ist.

Zur Lösung dieser grundsätzlichen Aufgabe ist in der Vergangenheit bei der Konstruktion einer zur Brechkraftänderung beitragenden Fläche eines progressiven Brillenglases von einer in einer Ebene liegenden oder gewunden verlaufenden Linie - auch als Hauptmeridian oder als Hauptlinie bezeichnet - als Konstruktionsrückgrad der Fläche" ausgegangen worden. Diese Linie verläuft zentral auf der Fläche von oben nach unten verläuft, und deren Verlauf in etwa dem Durchstoßpunkt der Sehstrahlen durch die Brillenglasfläche bei einer Blickbewegung und insbesondere Blicksenkung. Die Hauptkrümmungen eines jeden Punktes dieser Linie sind derart gewählt worden, daß die gewünschte Zunahme des Flächenbrechwertes (auch als Addition bezeichnet) vom Fernteil zum Nahteil erreicht wird. Ausgehend von dieser Linie sind dann die Seitenbereiche der Fläche (mehr oder weniger) geeignet berechnet worden.

Für die Gestaltung der Seitenbereiche sind eine Vielzahl von Lösungen bekannt geworden. In der Anfangszeit der Berechnung progressiver Brillengläser ist ein rein flächentheoretische Optimierung ausschließlich der progresiven Fläche durchgeführt worden, bei der eine möglichst weitgehende Reduzierung des störenden Flächenastigmatismus bzw. ein "Abdrängen" des Flächenastigmatismus in die seitlichen unteren Bereiche des Brillenglases im Vordergrund gestanden hat.

Typisch für diese Vorgehensweise sind die aus der US-PS 2 878 721 oder der DE-AS 20 44 639 bekannten progressiven Flächen für Brillengläser, bei denen - sofern die progressive Fläche die Vorderfläche ist - die Krümmungen von Schnitten der progressiven Fläche mit ebenen Flächen, die horizontal verlaufen (Horizontalschnitte) oder auf dem Hauptmeridian senkrecht stehen (Orthogonalschnitte), Kegelschnitte oder Kurven höherer Ordnung sind, deren Krümmung im Fernteil zunimmt und im Nahteil abnimmt. In der Progressionszone erfolgt der Übergang zwischen der Zunahme der Krümmung der Schnitte im Fernteil und der Abnahme im Nahteil.

Diese Vorgehensweise führt dazu, daß in den Seitenbereichen der Brechkraftunterschied und damit auch die Verschneidungen abgebaut werden. Nachteilig ist jedoch, daß durch den Abbau des Brechkraftunterschiedes in den Seitenbereichen das orientierende Sehen im Randbereich erschwert und - je nach Design - sehr störende Schaukeleffekte beim Blicken in Seitenbereiche erzeugt werden. Weiterhin ändert sich die Flächenbrechkraft von Horizontalschnitten vergleichsweise stark.

Deshalb ist in der DE-PS 28 14 936 vorgeschlagen worden, die Krümmung im Fernteil bzw. im Nahteil nur in einem Streifen beidseits des Hauptmeridians abnehmen bzw. zunehmen zu lassen und außerhalb dieses Streifens die Änderung der Krümmung umzukehren.

Gemeinsam ist allen diesen Ansätzen jedoch die rein flächenbezogene Optimierung der progressiven Fläche. Dieser rein flächenbezogene Ansatz findet sich auch in jüngeren Patentveröffentlichungen, wie der DE-C-42 38 067 oder der DE-C-43 42 234.

In der letztgenannten Druckschrift wird ein Ansatz beschrieben, bei dem bestimmte Bedingungen für die Gradienten des Flächenastigmatismus und des Flächenbrechwerts eingehalten werden sollen. Unabhängig davon, daß diese Gradienten beispielsweise dann, wenn die Fläche bereichsweise mit kubischen Splines beschrieben wird, überhaupt nicht definiert sind, läßt auch diese rein flächenbezogene Optimierung bestimmte physiologische Vorgaben außer Acht.

Ansätze für eine Optimierung der progressiven Fläche in der Gebrauchsstellung sind in der EP-A-677 177, der US-PS 4 606 622 oder der DE 196 12 284 beschrieben.

Zur Berechnung eines progressiven Fläche in der Gebrauchsstellung wird eine Gebrauchssituation festgelegt. Diese bezieht sich entweder auf einen konkreten Nutzer, für den die einzelnen Parameter in der jeweiligen Gebrauchssituation eigens ermittelt und die progressive Fläche gesondert berechnet und gefertigt wird, oder auf Durchschnittswerte, wie sie in der DIN 58 208 Teil 2 beschrieben sind.

Aber auch die bekannten, in der Gebrauchsstellung berechneten Brillengläser weisen noch eine Reihe von Nachteilen auf:

So sind bei den aus der US-PS 4 606 622 bekannten progressiven Flächen Spitzen im Verlauf der Linien gleichen Flächenastigmatismus für die Linien mit einem Flächenbrechwert von 5 dpt und 7 dpt vorhanden.

Der Grund hierfür dürfte möglicherweise darin liegen, daß bei der Berechnung Flächen- und Gebrauchsstellungsbezogene Ansätze gemischt verwendet worden sind.

Die DE-A-196 12 284 befaßt sich mit der Abnahme des mittleren Brechwerts in der Nähe zur Peripherie hin. Dies ist unzureichend, da auch im Fernteil der Brechwert zur Peripherie hin nicht übermäßig zunehmen darf. Vor allem aber werden durch diese einseitig Nahteilbezogenen Vorgaben Schaukeleffekte insbesondere bei einer rotierenden Blickbewegung hervorgerufen.

In der EP-A-0 911 672 ist der Verlauf der mittleren Brechkraft entlang eines Kreises mit einem Durchmesser von 40 mm angegeben. Dabei weist die mittlere Brechkraft, also eine flächenbezogene Größe, ein globales Minimum und ein globales Maximum auf. Auch bei derartigen Flächen treten vergleichsweise starke Schaukeleffekte auf.

US 5 719 658 offenbart eine progressive Linse, mit einer sphärischen Oberfläche, einer Fernsichtzone und einer Nahsichtzone, welche durch eine Progressionszone bzw. Zwischensichtzone entlang eines Hauptmeridians miteinander verbunden sind, wobei Beschränkungen der Fernsicht-, Nahsicht- und Zwischensichtzone anhand der Addition beschränkt sind und entlang eines Hauptmeridians der Progression eine Vielzahl vorn Voraussetzungen erfüllt sein müssen.

EP 0 911 670 offenbart eine multifokale, ophthalmische Linse mit einer asphärischen Fläche, welche an jedem Punkt eine mittlere Flächenbrechkraft und einen Flächenastigmatismus, sowie eine Fernsicht-, eine Nahsicht-, eine Mittelsichtzone und einen Hauptprogressionsmeridian, welcher die drei Zonen durchquert, aufweist, wobei ein Tangential-Ableitungsmodul der mittleren Flächenbrechkraft an einem Kreis mit einem Durchmesser von 40 mm, zentriert bezüglich der geometrischen Mitte der Linse, kleiner ist als ein Viertel eines Maximalwertes des Gradienten der mittleren Flächenbrechkraft entlang eines vorbestimmten Meridians und weiter ein Maximalwert des Flächenastigmatismus im Inneren des Kreises kleiner ist als eine Nennaddition der Linse.

US 5 949 519 offenbart eine multifokale, ophthalmische Linse mit einer Fernsichtzone, einer Nahsichtzone, einer Mittelsichtzone und einem Hauptmeridian entlang der Progression, wobei innerhalb eines Kreises mit einem Durchmesser von 40 mm um den geometrischen Mittelpunkt der Linse ein maximaler Zylinder vorliegt und der maximale Zylinder multipliziert mit dem Inversen des Abstands von dem geometrischen Mittelpunkt der Linse kleiner ist als die maximale Neigung der mittleren sphärischen Wirkung entlang des Hauptmeridians der Progression.

Es ist eine Aufgabe der vorliegenden Erfindung, ein progressives Brillenglas derart weiterzubilden, daß es nicht nur einen großen Fernteil und einen großen Nahteil aufweist, sondern daß auch Schaukeleffekte insbesondere bei rotierender Blickbewegung vermieden werden.

Diese Aufgabe wird gelöst durch das Verfahren gemäß Anspruch 1. Bevorzugte Ausführungsvarianten sind Gegenstand der abhängigen Ansprüche.

Erfindungsgemäß werden keine Flächenwerte, sondern ausschließlich Größen betrachtet, die sich auf die Gebrauchsstellung beziehen, nämlich die Abweichung vom vorgegebenen Astigmatismus (0 dpt beim astigmatimusfreien Auge bzw. der Abweichung bezüglich Betrag und Achslage vom Zylinder-Verordnungswert) und als Maß für die "Stärke" des Brillenglases der mittlere Gebrauchswert D.

Der mittlere Gebrauchswert D ist der Mittelwert der Kehrwerte der bildseitigen Schnittweiten S' minus der Objektentfernung, also der objektseitigen Schnittweite S

$$D = 0,5 * (S'1 + S'2) - S$$

S' = Kehrwert der bildseitigen Schnittweite

S = Kehrwert der objektseitigen Schnittweite.

Erfindungsgemäß ist erkannt worden, daß gerade der in der EP-A-0 911 672 angestrebte glatte Verlauf der mittleren Brechkraft längs eines Kreises mit einem Durchmesser von 40 mm, der sich in nur einem globalen Maximum und einem globalen Minimum äußert, die Ursache für die von Brillenträgern als äußerst störend empfundenen Schaukelbewegungen sein dürften.

Deshalb ist das Brillenglas gemäß der Lösung der Erfindung derart ausgebildet, daß die astigmatische Abweichung, d.h. die Differenz zwischen dem verordneten und dem tatsächlichen Astigmatismus längs von Kreisen mit einem Mittelpunkt, der 4 mm unterhalb des Zentrierpunktes liegt, und mit einem Durchmesser von 10, 15, 20, 25, 30, 35 und 40 mm folgende Bedingungen erfüllt:

- es treten zwei lokale Minima auf, die bei einem "rechten Brillenglas" bei 95° ± 10° (nach TABO) und bei 280° ± 10° und bei einem linken Brillenglas bei 85° ± 10° und 260° ± 10° liegen, und
- es treten zwei lokale Maxima auf, die sowohl bei einem "rechten Brillenglas" als auch bei einem linken Brillenglas bei 215° ± 10° und bei 335° ± 10° liegen.

Besonders bevorzugt ist es, wenn bei der astigmatischen Abweichung genau zwei lokale Minima und Maxima auftreten. Weiterhin ist es von Vorteil, wenn die Werte der beiden Minima kleiner als 0,15 dpt sind.

Insbesondere können sich die Werte der beiden Maxima sich um nicht mehr als 0,2 dpt unterscheiden und sind jeweils kleiner als 1,2 * Add-

Vorzugsweise erfüllt der mittlere Gebrauchswert längs von Kreisen mit einem Mittelpunkt, der 4 mm unterhalb des Zentrierpunktes liegt, und mit einem Durchmesser von 10,15, 20, 25, 30, 35 und 40 mm folgende Bedingungen:

- bei jedem Durchmesser tritt ein globales Minimum bei 90° ± 10° (nach TABO) und ein globales Maximum bei 280° ± 10° auf,
- bei Durchmessern kleiner als 16 mm sind die globalen Minima und Maxima auch die einzigen lokalen Minima und Maxima,
- bei einem Durchmesser von 40 mm tritt sowohl nasal als auch temporal jeweils ein lokales Minimum und ein lokales Maximum auf.

Weiterhin ist es bevorzugt, wenn sich bei Durchmessern zwischen 14 und 26 mm bei 200° ± 15° und bei 355° ± 15° Sattelpunkte bilden, wobei diese Sattelpunkte mit zunehmenden Durchmesser in lokale Minima bzw. Maxima übergehen. Die lokalen Minima können bei 215° ± 15° und bei 340° ± 15° und die lokalen Maximal bei 200° ± 15° und 355° ± 15° liegen.

## Kurze Beschreibung der Zeichnung

Die Erfindung wird nachstehend ohne Beschränkung des allgemeinen Erfindungsgedankens anhand von Ausführungsbeispielen unter Bezugnahme auf die Zeichnung exemplarisch beschrieben, auf die im übrigen hinsichtlich der Offenbarung aller im Text nicht näher erläuterten erfindungsgemäßen Einzelheiten ausdrücklich verwiesen wird.

Der Verlauf der astigmatischen Abweichung und des mittleren Gebrauchswertes längs Kreisen mit einem Durchmesser von 10 bis 40 mm,
die Isolinien der astigmatischen Abweichung für ein erfindungsgemäßes Brillenglas, und
die Isolinien für den mittleren Gebrauchswert für dieses Brillenglas konnen gezeigt werden.

Es zeigt:

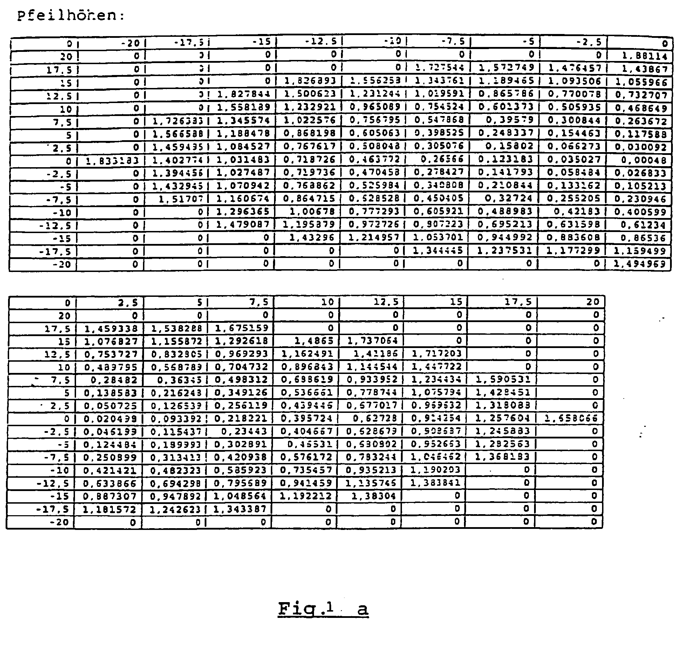

Fig. 1a     die Pfeilhöhe der progressiven Fläche eines konkreten Ausführungsbeispiels,

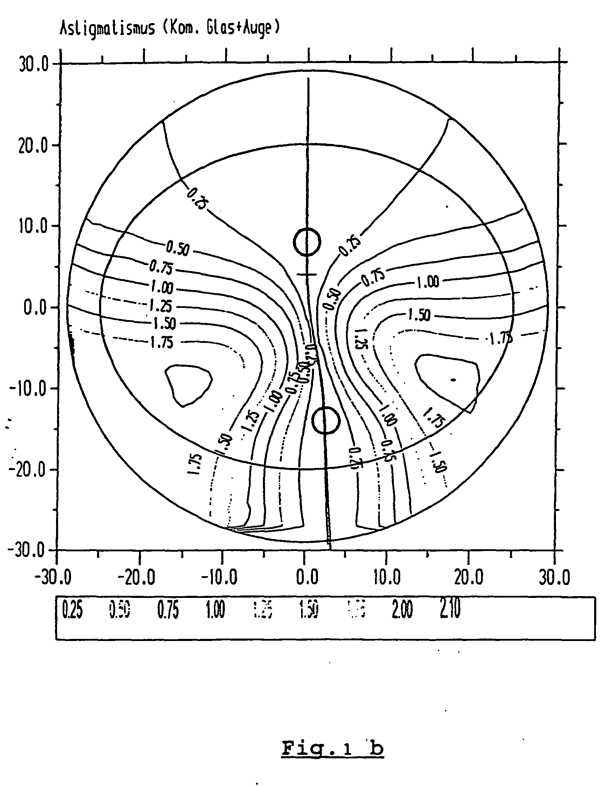

Fig. 1b     die Isolinien der astigmatischen Abweichung,

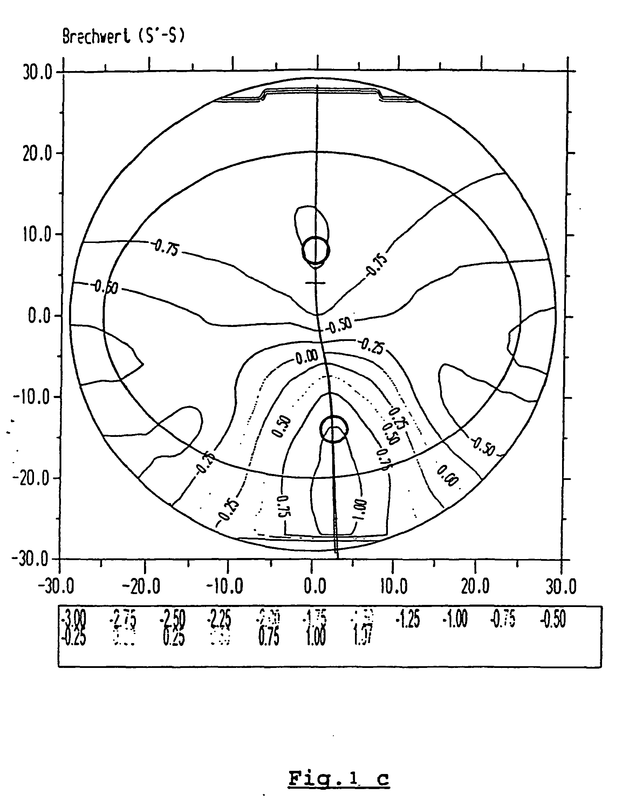

Fig. 1c     die Isolinien des mittleren Gebrauchswerts,

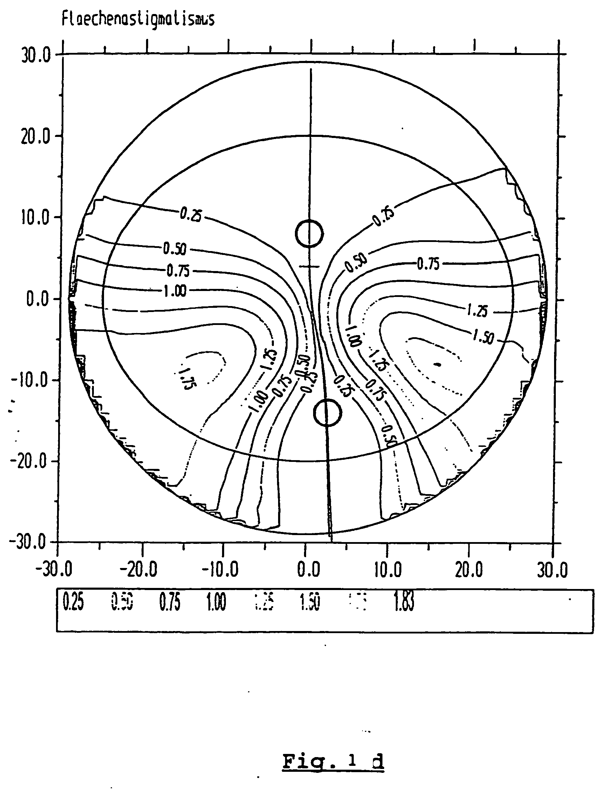

Fig. 1d     die Isolinien des Flächenastigmatismus,

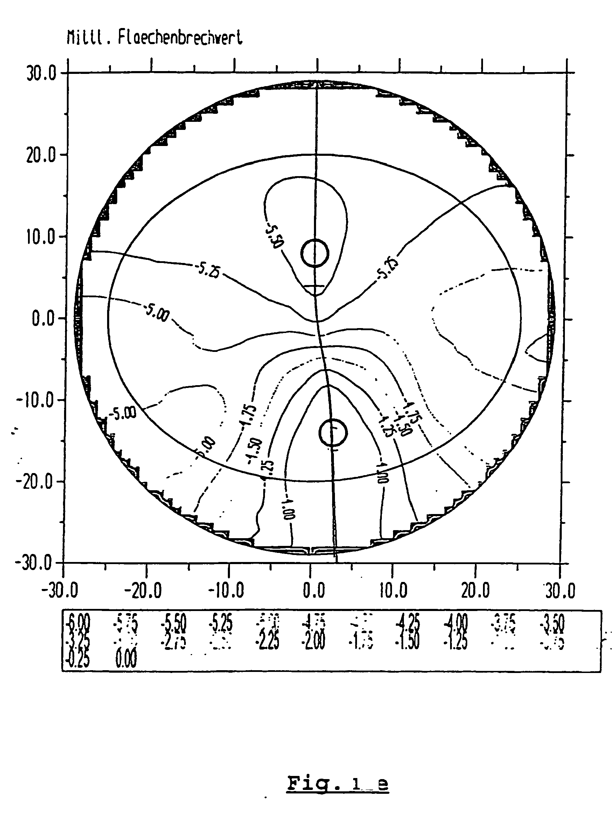

Fig. 1e     die Isolinien der mittleren Flächenbrechkraft für dieses Ausführungsbeispiel.

## Darstellung eines Ausführungsbeispiels

In allen Figuren ist die Abszisse (x-Achse) die horizontale Achse und der Ordinate (y-Achse) die vertikale Achse in Gebrauchsstellung.

Längs Kreisen mit einem Durchmesser von 10, 15, 20, 25, 30, 35 und 40 mm um einen Punkt, der 4 mm unterhalb des sogenannten Zentrierkreuzes liegt, können folgende Größen gezeigt werden :

1. Verlauf des mittleren Gebrauchswertes in dpt: durchgezogene Kurve D, linke Beschriftung auf der linken Ordinate
2. Achslage der astigmatische Abweichung in Grad: zweite durchgezogene Kurve, linke Beschriftung auf der rechten Ordinate,
3. astigmatische Abweichung in dpt: strichpunktierte Kurve, rechte Beschriftung auf der rechten Ordinate

Die astigmatische Abweichung und des mittlere Gebrauchswert dieses Ausführungsbeispiels der Erfindung innerhalb eines Kreises mit dem Radius 20 mm um einen Punkt, der 4 mm unterhalb des sogenannten Zentrierkreuzes liegt, kann dargestellt werden. Der Fernbezugspunkt und der Nahbezugspunkt sind mit Kreisen bezeichnet, ihre Lage ist dem jeweiligen Figuren zu entnehmen.

Die sogenannte astigmatische Abweichung, d. h. der "Rest-Astigmatismus" des Systems Brillenglas/Auge kann mittels sogenannter Isolinien beginnend mit der Isolinie 0,25 dpt dargestellt werden. Die Isolinien geben die Abweichung des Astigmatismus bzgl. Betrag und Achslage von der zylindrischen Verordnung - im Falle eines astigmatismusfreien Auges 0 dpt - an.

Der mittlere Gebrauchswert D, d. h. der Mittelwert der Kehrwerte der bildseitigen Schnittweiten $S'1$ und $S'2$ minus der Objektentfernung, also der objektseitigen Schnittweite S

$$D = 0,5 * (S'1 + S'2) - S$$

kann ebenfalls in Form sogenannter Isolinien beginnend mit der Isolinie 0,75 dpt dargestellt werden.

Sowohl der Fernteil als auch der Nahteil können relativ groß sein. Weiterhin nimmt im Fernteil der mittlere Gebrauchswert zur Peripherie hin kaum zu, im Nahteil nur wenig ab. Die maximale astigmatische Abweichung ist sehr gering, der Unterschied zwischen der maximalen Abweichung nasal und temporal unbedeutend.

Das in Fig. 1a beschriebene konkrete Ausführungsbeispiel weist im Fernbezugspunkt eine sphärische Wirkung (mittlerer Gebrauchswert) von -1 dpt und eine Addition A von 2 dpt auf. Eine astigmatische Verordnung ist nicht vorhanden. In allen Figuren ist die Abszisse (x-Achse) die horizontale Achse und der Ordinate (y-Achse) die vertikale Achse in Gebrauchsstellung.

Der Fern- und der Nahbezugspunkt sind in den Figuren 1 b-e jeweils mit Kreisen dargestellt, der Zentrierpunkt ist mit einem Kreuz bezeichnet - ihre Lage ist den Figuren zu entnehmen. Weiterhin ist der Verlauf der Hauptlinie eingezeichnet.

Die Teilfiguren a geben die Pfeilhöhen der progressiven augenseitigen Fläche für das Ausführungsbeispiel an. Unter Pfeilhöhe versteht man den Abstand eines Punktes mit den Koordinaten x und y (horizontale bzw. vertikale Achse in der Gebrauchsstellung des Brillenglases) von der Tangentialebene des Flächenscheitels. In der Tabelle sind jeweils in der linken Spalte die y-Werte (von - 20 bis +20 mm) und in der obersten Zeile ab der Spalte 2 folgende die x-Werte (von -20 bis + 20mm) aufgetragen. Die Pfeilhöhen sind ebenfalls in Millimeter angeben. Der Wert 0 bedeutet, daß für diese x,y-Koordinaten keine Pfeilhöhe angegeben wird.

Die Teilfigur 1b zeigt die astigmatische Abweichung innerhalb eines Kreises mit dem Radius 30 mm um einen Punkt, der 4 mm unterhalb des sogenannten Zentrierkreuzes liegt. Die astigmatische Abweichung ist. der "Rest-Astigmatismus" des Systems Brillenglas/Auge und ist mittels sogenannter Isolinien beginnend mit der Isolinie 0,25 dpt dargestellt. Die Isolinien geben die Abweichung des Astigmatismus bzgl. Betrag und Achslage von der zylindrischen Verordnung - im Falle eines astigmatismusfreien Auges 0 dpt - an.

Die Teilfigur 1c zeigt entsprechend die Isolinien für den mittleren Gebrauchswert dieses Ausführungsbeispiels. Der mittlere Gebrauchswert D ist der Mittelwert der Kehrwerte der bildseitigen Schnittweiten S'1 und S'2 minus der Objektentfernung, also der objektseitigen Schnittweite S

$$D = 0,5 * (S'1 + S'2) - S$$

und ist ebenfalls in Form sogenannter Isolinien beginnend mit der Isolinie 0,75 dpt dargestellt.

Entsprechend sind in den Teilfiguren 1d und 1e die Isolinien der Flächendaten, nämlich der Flächenastigmatismus und der mittlere Flächenbrechwert dargestellt. Zur Definition dieser Flächendaten wird auf die einleitenden Ausführungen verwiesen.

Das in Fig. 1a dargestellte Ausführungsbeispiel weist folgende individualisierte Gebrauchsbedingungen auf:

Das in Fig. 1a dargestellte Ausführungsbeispiel weist folgende individualisierte Gebrauchsbedingungen auf:

| | |
|---|---|
| D1x | 4,55 |
| D1y | 4,55 |
| N | 1, 597 |
| D | 1,59 |
| DRP | 1,0 |
| PD | 63 |
| HSA | 15 |
| Vorneigung | 0 |

Hierbei bedeuten:

D1x    Brechwert der Vorderfläche in x-Richtung(dpt)
D1y    Brechwert der Vorderfläche in y-Richtung(dpt)
n    Brechungsindex des Glasmaterials
d    Mittendicke der Brillenlinse in mm
DRP    Dickenreduktionsprisma in cm/m
PD    Pupillenabstand in mm
HSA    Hornhaut/Scheitel-Abstand in mm

Vorneigung des Brillenglases in Grad.

Selbstverständlich können die erfindungsgemäßen Merkmale auch auf die Berechnung und Herstellung von Brillengläsern mit zwei progressiven Flächen und/oder mit (zusätzlich) variierendem Brechungsindex übertragen wer-

den.

**Patentansprüche**

1. Verfahren zum Herstellen eines Brillenglases mit

   - einem zum Blicken in größere Entfernungen und insbesondere "ins Unendliche" ausgelegten Bereich, nachfolgend als "Fernteil" bezeichnet;
   - einem zum Blicken in kürzere Entfernungen und insbesondere "Lese-Entfernungen" ausgelegten Bereich, nachfolgend als "Nahteil" bezeichnet;
   - einer zwischen Fernteil und Nahteil angeordneten Progressionszone, in der die Wirkung des Brillenglases von dem Wert in einem im Fernteil gelegenen Fernbezugspunkt auf den Wert eines im Nahteil gelegenen Nahbezugspunktes längs einer zur Nase hin gewundenen Kurve, nachfolgend als "Hauptlinie" bezeichnet, zunimmt; und mit
   - einem Zentrierpunkt

   mit den Schritten:

   - Vorgeben vom Gebrauchswerten, insbesondere im Fernbezugspunkt und im Nahbezugspunkt,
   - Herstellen des Brillenglases derart, daß
   die astigmatische Abweichung, d.h. die Differenz zwischen dem verordneten und dem tatsächlichen Astigmatismus längs von Kreisen mit einem Mittelpunkt, der 4 mm unterhalb des Zentrierpunktes liegt, und mit einem Durchmesser von 10, 15, 20, 25, 30, 35 und 40 mm folgende Bedingungen erfüllt:

   - es treten zwei lokale Minima auf, die bei einem "rechten Brillenglas" bei 95° ± 10° (nach TABO) und bei 280° ± 10° und bei einem "linken Brillenglas" bei 85° ± 10° und 260° ± 10° liegen, und
   - es treten zwei lokale Maxima auf, die sowohl bei einem "rechten Brillenglas" als auch bei einem "linken Brillenglas" bei 215° ± 10° und bei 335° ± 10° liegen.

2. Verfahren nach Anspruch 1,
   **dadurch gekennzeichnet, daß** genau zwei lokale Minima und Maxima auftreten.

3. Verfahren nach Anspruch 1 oder 2,
   **dadurch gekennzeichnet, daß** die Werte der beiden Minima kleiner als 0,15 dpt sind.

4. Verfahren nach einem der Ansprüche 1 bis 3,
   **dadurch gekennzeichnet, daß** die Werte der beiden Maxima sich um nicht mehr als 0,2 dpt unterscheiden und jeweils kleiner als 1,2 * Add sind.

5. Verfahren nach einem der Ansprüche 1 bis 4,
   **dadurch gekennzeichnet, daß** der mittlere Gebrauchswert längs von Kreisen mit einem Mittelpunkt, der 4 mm unterhalb des Zentrierpunktes liegt, und mit einem Durchmesser von 10, 15, 20, 25, 30, 35 und 40 mm folgende Bedingungen erfüllt:

   - bei jedem Durchmesser tritt ein globales Minimum bei 90° ± 10° (nach TABO) und ein globales Maximum bei 280° ± 10° auf,
   - bei Durchmessern kleiner als 16 mm sind die globalen Minima und Maxima auch die einzigen lokalen Minima und Maxima,
   - bei einem Durchmesser von 40 mm tritt sowohl nasal als auch temporal jeweils ein lokales Minimum und ein lokales Maximum auf.

6. Verfahren nach einem der Ansprüche 1 bis 5,
   **dadurch gekennzeichnet, daß** sich bei Durchmessern zwischen 14 und 26 mm bei 200° ± 15° und bei 355° ± 15° Sattelpunkte bilden.

7. Verfahren nach Anspruch 6,
   **dadurch gekennzeichnet, daß** mit zunehmenden Durchmesser die Sattelpunkte in lokale Minima bzw. Maxima übergehen.

8. Verfahren nach Anspruch 7,
**dadurch gekennzeichnet, daß** die lokalen Minima bei 215° ± 15° und bei 340° ± 15° und die lokalen Maximal bei 200° ± 15° und 355° ± 15° liegen.

**Claims**

1. Process for the production of a spectacle lens with

   • a region designed for looking into greater distances and in particular "into infinity", hereafter referred to as "far part";
   • a region designed for looking into shorter distances and in particular "reading distances", hereafter referred to as "near part";
   • a progression zone arranged between the far part and the near part, in which the effect of the spectacle lens increases from the value in a far reference point located in the far part to the value of a near reference point located in the near part along a curve curved towards the nose, hereafter referred to as "principal line"; and with
   • a centring point

   with the steps:

   • predefining use values, in particular in the far reference point and in the near reference point
   • producing the spectacle lens in such a manner that

   the astigmatic deviation, i.e. the difference between the prescribed astigmatism and the actual astigmatism along circles with a centre point, which lies 4 mm below the centring point, and with a diameter of 10, 15, 20, 25, 30, 35 and 40 mm, meets the following conditions:

   • two local minima occur, which in the case of a "right spectacle lens" lie at 95° ± 10° (according to TABO) and at 280° ± 10°, and in the case of a "left spectacle lens" lie at 85° ± 10° and 260° ± 10°, and
   • two local maxima occur, which lie at 215° ± 10° and at 335° ± 10° both in the case of a "right spectacle lens" and in the case of a "left spectacle lens".

2. Process according to claim 1, **characterised in that** precisely two local minima and maxima occur.

3. Process according to claim 1 or 2, **characterised in that** the values of the two minima are less than 0.15 dpt.

4. Process according to one of claims 1 to 3, **characterised in that** the values of the two maxima differ by no more than 0.2 dpt and are respectively less than 1.2 * Add.

5. Process according to one of claims 1 to 4, **characterised in that** the average use value along circles with a centre point, which lies 4 mm below the centring point, and with a diameter of 10, 15, 20, 25, 30, 35 and 40 mm, meets the following conditions:

   • with each diameter a global minimum at 90° ± 10° (according to TABO) and a global maximum at 280° ± 10° occurs,
   • with diameters less than 16 mm the global minima and maxima are also the only local minima and maxima,
   • with a diameter of 40 mm a local minimum and a local maximum respectively occur both nasally and temporally.

6. Process according to one of claims 1 to 5, **characterised in that** with diameters between 14 and 26 mm saddle points occur at 200° ± 15° and at 355° ± 15°.

7. Process according to claim 6, **characterised in that** with increasing diameter the saddle points merge into local minima or maxima.

8. Process according to claim 7, **characterised in that** the local minima lie at 215° ± 15° and at 340° ± 15° and the local maxima lie at 200° ± 15° and 355° ± 15°.

**Revendications**

1.  Procédé de fabrication d'un verre de lunette avec :

    - une zone dimensionnée pour regarder à de plus grandes distances et en particulier "à l'infini", désignée ci-après comme "partie lointaine" ;
    - une zone dimensionnée pour regarder à de plus petites distances et en particulier à des "distances de lecture" désignée ci-après comme "partie proche" ;
    - une zone progressive disposée entre la partie lointaine et la partie proche, dans laquelle l'action du verre de lunette augmente de la valeur d'un point de référence éloigné placé dans la partie lointaine à la valeur d'un point de référence proche placé dans la partie proche, le long d'une courbe tournant vers le nez, désignée ci-après comme "ligne principale" ; et avec
    - un point de centrage

    avec les étapes suivantes :

    - attribution de données d'utilisation, en particulier au point de référence lointaine et au point de référence proche
    - fabrication du verre de lunette de telle manière que l'écart astigmatique, c'est-à-dire la différence entre l'astigmatisme prescrit et l'astigmatisme effectif, le long de cercles avec un point central qui se trouve à 4 mm en-dessous du point de centrage et avec un diamètre de 10, 15, 20, 25, 30, 35 et 40 mm, remplit les conditions suivantes:
    - deux valeurs minimales locales interviennent, qui sont dans un "verre de lunette droit" de 95° $\pm$ 10° (selon TABO) et de 280° $\pm$ 10° et dans un "verre de lunette gauche" de 85° $\pm$ 10° et 260° $\pm$ 10°, et
    - deux valeurs locales maximales interviennent qui sont de 215° $\pm$ 10° et de 335° $\pm$ 10° aussi bien dans un "verre de lunette droit" que dans un "verre de lunette gauche".

2.  Procédé selon la revendication 1, **caractérisé en ce que** précisément deux valeurs locales minimales et maximales interviennent.

3.  Procédé selon les revendications 1 ou 2,
    **caractérisé en ce que** les valeurs des deux minimales sont inférieures à 0,15 dpt.

4.  Procédé selon l'une des revendications 1 à 3, **caractérisé en ce que** les valeurs des deux maximales ne se différencient pas de plus de 0,2 dpt et sont chaque fois inférieures à 1,2* Add.

5.  Procédé selon l'une des revendications 1 à 4, **caractérisé en ce que** la valeur d'utilisation moyenne le long de cercles avec un point central qui est à 4 mm en-dessous du point de centrage et avec un diamètre de 10, 15, 20, 25, 30, 35 et 40 mm, remplit les conditions suivantes :

    - avec chaque diamètre intervient une valeur minimale globale de 90° $\pm$ 10° (selon TABO) et une valeur maximale globale de 280° $\pm$ 10°,
    - avec des diamètres inférieurs à 16 mm les valeurs globales minimales et maximales sont également les seules valeurs minimales et maximales locales,
    - avec un diamètre de 40 mm, une valeur minimale locale et une valeur maximale locale interviennent chaque fois aussi bien au niveau nasal que temporal.

6.  Procédé selon l'une des revendications 1 à 5,
    **caractérisé en ce que** dans des diamètres entre 14 et 26 mm, des points hyperboliques se forment à 200° $\pm$ 15° et à 355° $\pm$ 15°.

7.  Procédé selon la revendication 6,
    **caractérisé en ce qu'**avec des diamètres de plus en plus grands, les points hyperboliques changent en valeurs minimales ou valeurs maximales locales.

8.  Procédé selon la revendication 7,
    **caractérisé en ce que** les valeurs locales minimales sont de 215° $\pm$ 15° et de 340° $\pm$ 15 et les valeurs maximales locales sont de 200° $\pm$ 15° et de 355° $\pm$ 15°.

Pfeilhöhen:

| 0 | -20 | -17.5 | -15 | -12.5 | -10 | -7.5 | -5 | -2.5 | 0 |
|---|---|---|---|---|---|---|---|---|---|
| 20 | 0 | 0 | 0 | 0 | 0 | 0 | 0 | 0 | 1.88114 |
| 17.5 | 0 | 0 | 0 | 0 | 0 | 1.727544 | 1.572749 | 1.476457 | 1.43867 |
| 15 | 0 | 0 | 0 | 1.826893 | 1.556253 | 1.343761 | 1.189465 | 1.093506 | 1.055966 |
| 12.5 | 0 | 0 | 1.827844 | 1.500623 | 1.231244 | 1.019591 | 0.865786 | 0.770078 | 0.732707 |
| 10 | 0 | 0 | 1.558189 | 1.232921 | 0.965089 | 0.754524 | 0.601373 | 0.505935 | 0.468649 |
| 7.5 | 0 | 1.726333 | 1.345574 | 1.022576 | 0.756795 | 0.547868 | 0.39579 | 0.300844 | 0.263672 |
| 5 | 0 | 1.566588 | 1.188478 | 0.868198 | 0.605063 | 0.398525 | 0.248337 | 0.154463 | 0.117588 |
| 2.5 | 0 | 1.459495 | 1.084527 | 0.767617 | 0.508043 | 0.305076 | 0.15802 | 0.066273 | 0.030092 |
| 0 | 1.833183 | 1.402774 | 1.031483 | 0.718726 | 0.463772 | 0.26566 | 0.123183 | 0.035027 | 0.00048 |
| -2.5 | 0 | 1.394456 | 1.027487 | 0.719736 | 0.470458 | 0.278427 | 0.141793 | 0.058484 | 0.026833 |
| -5 | 0 | 1.432945 | 1.070942 | 0.768862 | 0.525984 | 0.340808 | 0.210844 | 0.133162 | 0.105213 |
| -7.5 | 0 | 1.51707 | 1.160674 | 0.864715 | 0.628528 | 0.450405 | 0.32724 | 0.255205 | 0.230946 |
| -10 | 0 | 0 | 1.296365 | 1.00678 | 0.777293 | 0.605921 | 0.488983 | 0.42183 | 0.400599 |
| -12.5 | 0 | 0 | 1.479087 | 1.195879 | 0.972726 | 0.807223 | 0.695213 | 0.631598 | 0.61234 |
| -15 | 0 | 0 | 0 | 1.43296 | 1.214957 | 1.053701 | 0.944992 | 0.883608 | 0.86536 |
| -17.5 | 0 | 0 | 0 | 0 | 0 | 1.344445 | 1.237531 | 1.177299 | 1.159499 |
| -20 | 0 | 0 | 0 | 0 | 0 | 0 | 0 | 0 | 1.494969 |

| 0 | 2.5 | 5 | 7.5 | 10 | 12.5 | 15 | 17.5 | 20 |
|---|---|---|---|---|---|---|---|---|
| 20 | 0 | 0 | 0 | 0 | 0 | 0 | 0 | 0 |
| 17.5 | 1.459338 | 1.538288 | 1.675159 | 0 | 0 | 0 | 0 | 0 |
| 15 | 1.076827 | 1.155872 | 1.292618 | 1.4865 | 1.737064 | 0 | 0 | 0 |
| 12.5 | 0.753727 | 0.832905 | 0.969293 | 1.162491 | 1.41186 | 1.717203 | 0 | 0 |
| 10 | 0.489795 | 0.568789 | 0.704732 | 0.896843 | 1.144544 | 1.447722 | 0 | 0 |
| 7.5 | 0.28482 | 0.36345 | 0.498312 | 0.699619 | 0.933952 | 1.234434 | 1.590531 | 0 |
| 5 | 0.138583 | 0.216243 | 0.349126 | 0.536661 | 0.778744 | 1.075794 | 1.428451 | 0 |
| 2.5 | 0.050725 | 0.126539 | 0.256119 | 0.439446 | 0.677017 | 0.969532 | 1.318083 | 0 |
| 0 | 0.020499 | 0.093392 | 0.218221 | 0.395724 | 0.62728 | 0.914254 | 1.257604 | 1.658066 |
| -2.5 | 0.046199 | 0.115437 | 0.23443 | 0.404667 | 0.628679 | 0.909537 | 1.245883 | 0 |
| -5 | 0.124484 | 0.199993 | 0.302891 | 0.45531 | 0.690902 | 0.952663 | 1.292563 | 0 |
| -7.5 | 0.250899 | 0.313413 | 0.420938 | 0.576172 | 0.793244 | 1.046462 | 1.368193 | 0 |
| -10 | 0.421421 | 0.482323 | 0.585923 | 0.735457 | 0.935213 | 1.190203 | 0 | 0 |
| -12.5 | 0.633866 | 0.694298 | 0.795689 | 0.941459 | 1.135745 | 1.383841 | 0 | 0 |
| -15 | 0.887307 | 0.947892 | 1.048564 | 1.192212 | 1.38304 | 0 | 0 | 0 |
| -17.5 | 1.181572 | 1.242623 | 1.343387 | 0 | 0 | 0 | 0 | 0 |
| -20 | 0 | 0 | 0 | 0 | 0 | 0 | 0 | 0 |

## Fig.1 a

Astigmatismus (Kom. Glas+Auge)

Fig. 1 b

Fig. 1 c

Flaechenastigmatismus

Fig. 1 d

Fig. 1 a

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2878721 A
- DE 2044639 B
- DE 2814936 C
- DE 4238067 C
- DE 4342234 C
- EP 677177 A
- US 4606622 A

- DE 19612284
- DE 19612284 A
- EP 0911672 A
- US 5719658 A
- EP 0911670 A
- US 5949519 A